# EUROPEAN PATENT APPLICATION

(11) **EP 3 882 945 A1**
(43) Date of publication of application: **22.09.2021**
(21) Application number: 19884490.4
(22) Date of filing: 31.10.2019
(51) Int. Cl.: H01H 45/04, H01H 50/04, H02H 3/08, H02H 3/087, H02H 7/18, H02J 7/00

(54) **RELAY MODULE**

(30) Priority: 15.11.2018 JP 2018214766
(71) Applicant: Panasonic Intellectual Property Management Co., Ltd., Osaka-shi, Osaka 540-6207 (JP)
(72) Inventor: MORI Keisuke, Osaka-shi, Osaka 540-6207 (JP); WATANABE Hideki, Osaka-shi, Osaka 540-6207 (JP)
(74) Representative: Vigand, Philippe
(86) International application number: PCT/JP2019/042796
(87) International publication number: WO 2020/100612

(57) **Abstract**

A fuse is at least partially located between a first load relay and a first charging relay, and an electric current detector is at least partially located between a second load relay and a second charging relay. The electric current detector is in contact with an insulating layer. As viewed from the side, the fuse is located below the electric current detector. The fuse is not in contact with the electric current detector.

## Description

### TECHNICAL FIELD

The present disclosure relates to relay modules used in various vehicles.

### BACKGROUND ART

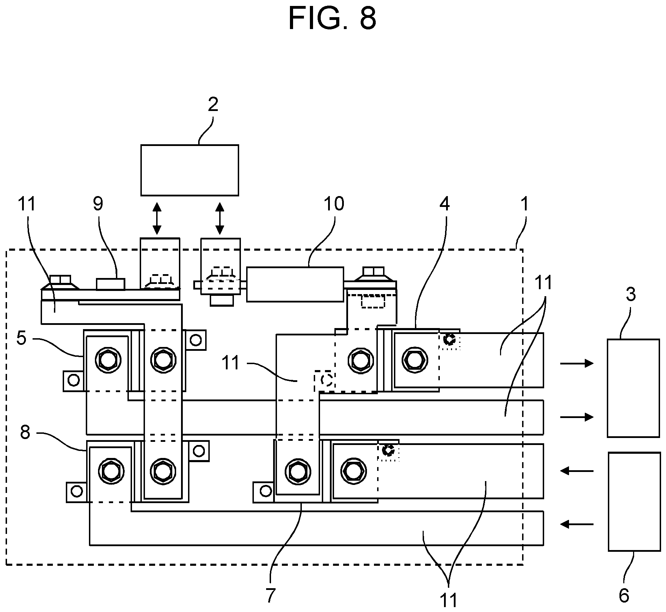

Hereinafter, a conventional relay module is described with reference to a figure. FIG. 8 is an external top view illustrating the configuration of a conventional relay module. Relay module 1 includes plus-side main relay 4 and minus-side main relay 5. Plus-side main relay 4 and minus-side main relay 5 connect main battery 2 to vehicle load 3 or disconnect vehicle load 3 from main battery 2. Furthermore, relay module 1 includes plus-side charging relay 7 and minus-side charging relay 8. Plus-side charging relay 7 and minus-side charging relay 8 connect main battery 2 to external power supply 6 or disconnect external power supply 6 from main battery 2. Note that external power supply 6 charges main battery 2. Furthermore, relay module 1 includes: electric current sensor 9 that detects an electric current flowing to main battery 2; and fuse 10 that interrupts an electric current in the event of an overcurrent in main battery 2.

A high electric current frequently flows through plus-side main relay 4, minus-side main relay 5, plus-side charging relay 7, and minus-side charging relay 8, and therefore the area of conductor 11 which is connected to plus-side main relay 4, minus-side main relay 5, plus-side charging relay 7, and minus-side charging relay 8 is set large. Conductor 11 includes a function to serve as a conductor and a function to serve as a heat dissipator.

Note that Patent Literature (PTL) 1, for example, is known as related art document information pertaining to the disclosure of the present application.

### Citation List

### Patent Literature

PTL 1: Unexamined Japanese Patent Publication No. 2002-271944

### SUMMARY OF THE INVENTION

In conventional relay module 1, the temperatures of fuse 10 and electric current sensor 9 disposed on conductor 11 rise substantially equally with heat transferred thereto from the surroundings. If a high electric current continuously flows to relay module 1, the temperature of electric current sensor 9 which has a narrow operating temperature range reaches the upper limit of allowable temperatures at an early stage. As a result, even in the state where the electric current flowing to fuse 10 has not reached an allowable electric current value, in other words, even in the normal operation range of relay module 1, the electric current sensor may become unable to operate normally, causing relay module 1 to fail in detecting an electric current with high accuracy. This means that in conventional relay module 1, there is a possibility that the operational reliability may decrease.

A relay module according to the present disclosure includes: a base; a first load relay located in a first direction from the base and fixed to the base; a first charging relay located in the first direction from the base, spaced apart from the first load relay, and fixed to the base; a second load relay located in the first direction from the base and fixed to the base; a second charging relay located in the first direction from the base, spaced apart from the second load relay, and fixed to the base; an interruption conductor configured to connect the first load relay and the first charging relay to each other; a fuse connected to the interruption conductor; a first input terminal connected to the fuse; a detection conductor configured to connect the second load relay and the second charging relay to each other; an electric current detector connected to the detection conductor; a second input terminal connected to the electric current detector; an insulating layer disposed in the first direction from the first load relay, the second load relay, the first charging relay, and the second charging relay; and a heat dissipator disposed in the first direction from the insulating layer. The fuse is at least partially located between the first load relay and the first charging relay. The electric current detector is at least partially located between the second load relay and the second charging relay. The electric current detector is in contact with the insulating layer. As viewed in a second direction perpendicular to the first direction, the fuse is located in a third direction, which is opposite to the first direction, from the electric current detector. The fuse is not in contact with the electric current detector.

According to the present disclosure, the electric current detector is disposed to be thermally strongly bonded to the insulating layer and the heat dissipator and be thermally weakly bonded to the fuse. Therefore, heat that is likely to be generated at the relay, the connection point between the relay and detection conductor, and the like is actively discharged to the heat dissipator. Furthermore, heat that is likely to be generated at the relay, the connection point between the relay and the interruption conductor, and the like is not easily transferred to the detection conductor. Therefore, even if a high electric current continuously flows to the relay module, an increase in the temperature of the detection conductor due to factors other than heat generation caused by an electric current flowing to the detection conductor is suppressed. As a result, the operating temperature range of the electric current detector is properly secured, enabling accurate electric current detection of the detection conductor; thus, the operational reliability of the relay module can be improved.

### BRIEF DESCRIPTION OF THE DRAWINGS

FIG. 1 is an external side view illustrating the configuration of a relay module according to an exemplary embodiment of the present disclosure.
FIG. 2 is an external top view illustrating the configuration of a relay module according to an exemplary embodiment of the present disclosure.
FIG. 3 is a function block diagram of a vehicle including a relay module according to an exemplary embodiment of the present disclosure.
FIG. 4 is an external side view illustrating the configuration of an interruption conductor of a relay module according to an exemplary embodiment of the present disclosure.
FIG. 5A is an external top view illustrating the configuration of an interruption conductor of a relay module according to an exemplary embodiment of the present disclosure.
FIG. 5B is an external top view illustrating the configuration of another interruption conductor of a relay module according to an exemplary embodiment of the present disclosure.
FIG. 6 is an external side view illustrating the configuration of a detection conductor of a relay module according to an exemplary embodiment of the present disclosure.
FIG. 7A is an external top view illustrating the configuration of a detection conductor of a relay module according to an exemplary embodiment of the present disclosure.
FIG. 7B is an external top view illustrating the configuration of another detection conductor of a relay module according to an exemplary embodiment of the present disclosure.
FIG. 8 is an external top view illustrating the configuration of a conventional relay module.

### DESCRIPTION OF EMBODIMENT

Hereinafter, an exemplary embodiment of the present disclosure will be described with the Drawings.

In the present exemplary embodiment, the upward direction is referred to as a first direction, the horizontal direction is referred to as a second direction, and the downward direction is referred to as a third direction.

### EXEMPLARY EMBODIMENT

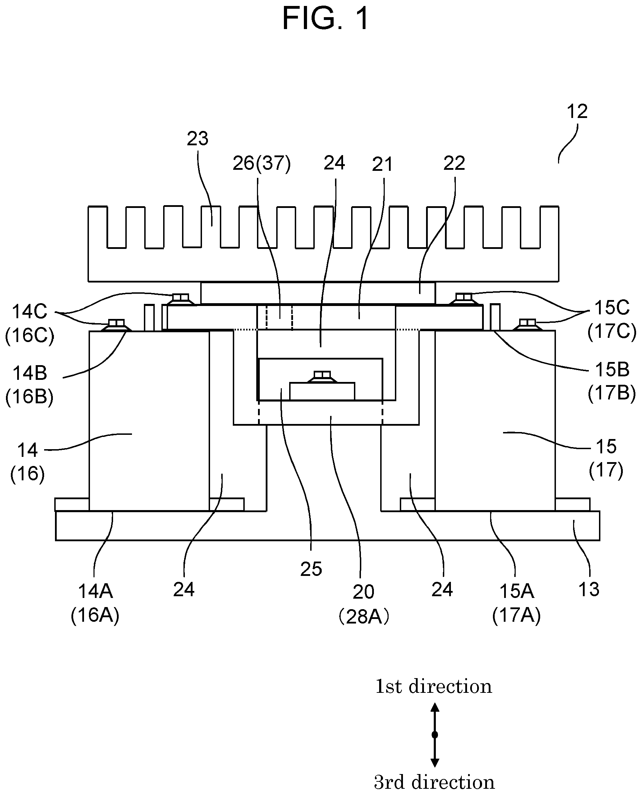

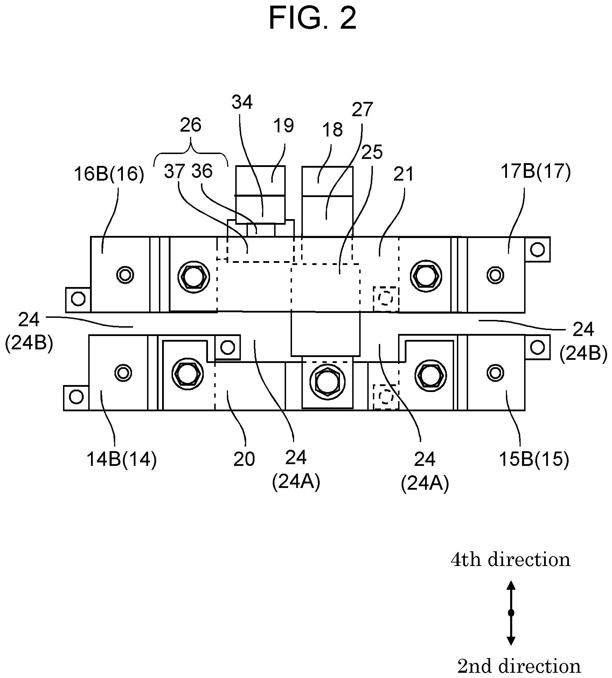

FIG. 1 is an external side view illustrating the configuration of a relay module according to an exemplary embodiment of the present disclosure. FIG. 2 is an external top view illustrating the configuration of the relay module according to the exemplary embodiment of the present disclosure.

Relay module 12 includes: base 13, first load relay 14, first charging relay 15, second load relay 16, second charging relay 17, first input terminal 18, second input terminal 19, interruption conductor 20, detection conductor 21, insulating layer 22, and heat dissipator 23. In FIG. 2, for convenience of description, base 13, insulating layer 22, and heat dissipator 23 are not illustrated.

First load relay 14 and first charging relay 15 are disposed with space 24 therebetween. In other words, first load relay 14 and first charging relay 15 are disposed apart from each other. Bottom 14A of first load relay 14 and bottom 15A of first charging relay 15 are fixed to base 13. Electrode 14C is provided on upper surface 14B of first load relay 14. Electrode 15C is provided on upper surface 15B of first charging relay 15.

Note that upper surface 14B of first load relay 14 does not necessarily need to be flat and may include a recess. In the case where electrode 14C is provided in the recess of upper surface 14B of first load relay 14, electrode 14C can be construed as being provided on upper surface 14B as well.

Similarly, upper surface 15B of first charging relay 15 does not necessarily need to be flat and may include a recess. In the case where electrode 15C is provided in the recess of upper surface 15B of first charging relay 15, electrode 15C can be construed as being provided on upper surface 15B as well.

Second load relay 16 and second charging relay 17 are disposed with space 24 therebetween. In other words, second load relay 16 and second charging relay 17 are disposed apart from each other. Bottom 16A of second load relay 16 and bottom 17A of second charging relay 17 are fixed to base 13. Electrode 16C is provided on upper surface 16B of second load relay 16. Electrode 17C is provided on upper surface 17B of second charging relay 17.

Note that upper surface 16B of second load relay 16 does not necessarily need to be flat and may include a recess. In the case where electrode 16C is provided in the recess of upper surface 16B of second load relay 16, electrode 16C can be construed as being provided on upper surface 16B as well.

Similarly, upper surface 17B of second charging relay 17 does not necessarily need to be flat and may include a recess. In the case where electrode 17C is provided in the recess of upper surface 17B of second charging relay 17, electrode 15C can be construed as being provided on upper surface 15B as well.

Interruption conductor 20 connects first load relay 14 and first charging relay 15. Furthermore, interruption conductor 20 is also connected to first input terminal 18 via fuse 25.

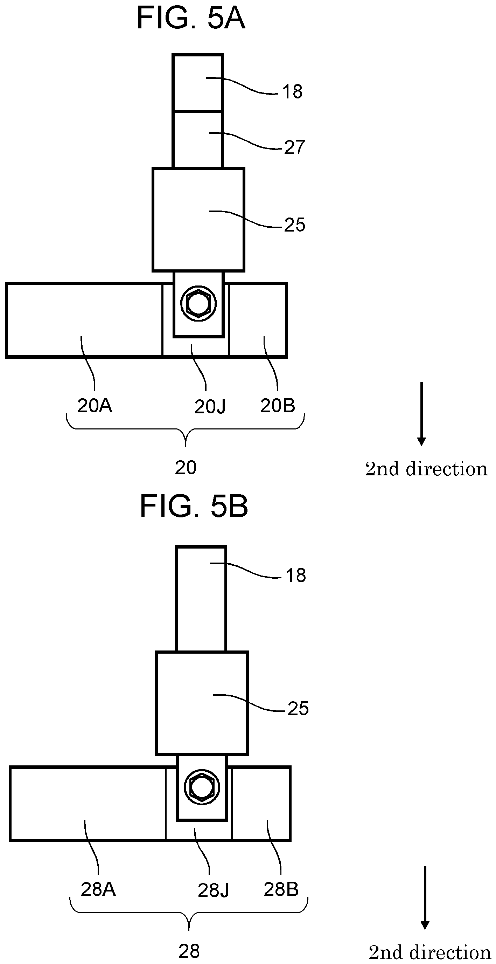

Note that in FIG. 2, fuse 25 is connected to first input terminal 18 via first conductor 27, but does not necessarily need to constitute first conductor 27. A detail description will be given later with reference to FIG. 5B.

Detection conductor 21 connects second load relay 16 and second charging relay 17. Furthermore, electric current detector 26 is connected to detection conductor 21. Furthermore, detection conductor 21 is connected to second input terminal 19 via electric current detector 26.

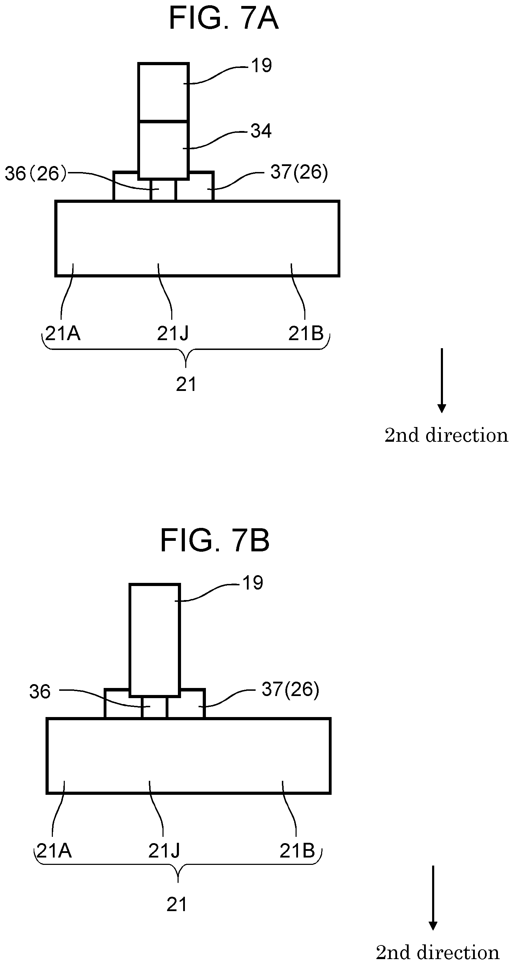

Note that in FIG. 2, electric current detector 26 is connected to second input terminal 19 via second conductor 34, but does not necessarily need to constitute second conductor 34. A detail description will be given later with reference to FIG. 7B.

Insulating layer 22 is disposed above first load relay 14, second load relay 16, first charging relay 15, and second charging relay 17. Note that insulating layer 22 may or may not be in contact with first load relay 14, second load relay 16, first charging relay 15, and second charging relay 17. Heat dissipator 23 is disposed above (in the first direction from) insulating layer 22. Insulating layer 22 is in contact with heat dissipator 23.

Electric current detector 26 and fuse 25 are disposed in space 24. In space 24, electric current detector 26 is positioned closer to insulating layer 22 than fuse 25 is. Electric current detector 26 is in contact with insulating layer 22. Fuse 25 is positioned closer to base 13 than electric current detector 26 is, and fuse 25 is not in contact with electric current detector 26. In other words, as viewed from the side of relay module 12 (in the second direction), fuse 25 is located below (in the third direction from) electric current detector 26. Fuse 25 and base 13 may or may not be in contact with each other.

With the above configuration, detection conductor 21 and electric current detector 26 are disposed to be thermally strongly bonded to insulating layer 22 and heat dissipator 23, and electric current detector 26 is disposed to be thermally weakly bonded to fuse 25.

Therefore, heat that is likely to be generated at the connection point between second load relay 16 and second charging relay 17 is actively discharged to heat dissipator 23 through detection conductor 21 and electric current detector 26. Heat that is likely to be generated at the connection point between second load relay 16 and detection conductor 21 and the connection point between second charging relay 17 and detection conductor 21 is actively discharged to heat dissipator 23 through detection conductor 21 and electric current detector 26.

On the other hand, heat that is likely to be generated at the connection point between first load relay 14 and first charging relay 15 is not easily transferred to detection conductor 21 and electric current detector 26. Heat that is likely to be generated at the connection point between first load relay 14 and interruption conductor 20 and the connection point between first charging relay 15 and interruption conductor 20 is not easily transferred to detection conductor 21 and electric current detector 26.

Therefore, even if a high electric current continuously flows to relay module 12, an increase in the temperature of detection conductor 21 due to factors other than heat generation caused by an electric current flowing to detection conductor 21 is suppressed. As a result, the operating temperature range of electric current detector 26 in detection conductor 21 is properly secured, enabling accurate electric current detection of detection conductor 21; thus, the operational reliability of relay module 12 can be improved.

### [Details of Configuration of Relay Module 12]

The configuration of relay module 12 will be described in detail with reference to FIG. 1 and FIG. 2. As described earlier, relay module 12 includes base 13, first load relay 14, first charging relay 15, second load relay 16, second charging relay 17, first input terminal 18, second input terminal 19, interruption conductor 20, detection conductor 21, insulating layer 22, and heat dissipator 23.

First load relay 14, first charging relay 15, second load relay 16, and second charging relay 17 are disposed on the same base 13. First load relay 14 and first charging relay 15 oppose each other across space 24. In other words, first load relay 14 and first charging relay 15 are disposed apart from each other. Second load relay 16 and second charging relay 17 oppose each other across space 24. In other words, second load relay 16 and second charging relay 17 are disposed apart from each other. Furthermore, first load relay 14 and second load relay 16 oppose each other across space 24. In other words, first load relay 14 and second load relay 16 are disposed apart from each other. Furthermore, first charging relay 15 and second charging relay 17 oppose each other across space 24. In other words, first charging relay 15 and second charging relay 17 are disposed apart from each other.

Stated differently, first load relay 14, first charging relay 15, second load relay 16, and second charging relay 17 are arranged in four separate areas of a two-by-two matrix.

Space 24 across which first load relay 14 and first charging relay 15 oppose each other and second load relay 16 and second charging relay 17 oppose each other is, in particular, denoted as first space 24A. Space 24 across which first load relay 14 and second load relay 16 oppose each other and first charging relay 15 and second charging relay 17 oppose each other is, in particular, denoted as second space 24B. In this case, first space 24A is large and has a great width between the opposing relays compared to second space 24B. Furthermore, fuse 25 and electric current detector 26 are disposed in first space 24A.

Furthermore, assuming that the direction in which first load relay 14 is located with respect to second load relay 16 is the second direction, first input terminal 18 is led out from interruption conductor 20 in the direction (the fourth direction) opposite to the second direction. Second input terminal 19 is led out from detection conductor 21 in the direction (the fourth direction) opposite to the second direction.

Stated differently, as viewed in the first direction (from above), first input terminal 18, second input terminal 19, the region between second load relay 16 and second charging relay 17, and the region between first load relay 14 and first charging relay 15 are arranged in this order in the second direction.

With this configuration, there can be a long distance between first input terminal 18 and each of first load relay 14 and first charging relay 15 which are connected to first input terminal 18 via interruption conductor 20. This makes it possible to easily dispose, in space 24, fuse 25 connected to interruption conductor 20 and having a large size in the fourth direction.

Furthermore, regarding electric current detector 26 and fuse 25 disposed in first space 24A in relay module 12, fuse 25 is located below (in the third direction from) electric current detector 26 as viewed from the side (as viewed in the second direction). Electric current detector 26 and fuse 25 are disposed so as not to contact each other to make the thermal bond between electric current detector 26 and fuse 25 weak. Electric current detector 26 is in contact with insulating layer 22, and insulating layer 22 is in contact with heat dissipator 23. Thus, heat dissipation from electric current detector 26 is easy.

It is sufficient that electric current detector 26 have better heat dissipation properties than fuse 25; the aforementioned vertical positional relationship between electric current detector 26 and fuse 25 is important. Electric current detector 26 and fuse 25 are not required to be fully fit within first space 24A; it is sufficient that electric current detector 26, fuse 25, and the like be partially fit within first space 24A. Furthermore, the positioning of electric current detector 26 and fuse 25 does not need to be in immediate proximity such as that illustrated in the top view of FIG. 2.

### [Explanations of Function Block Diagram of Vehicle]

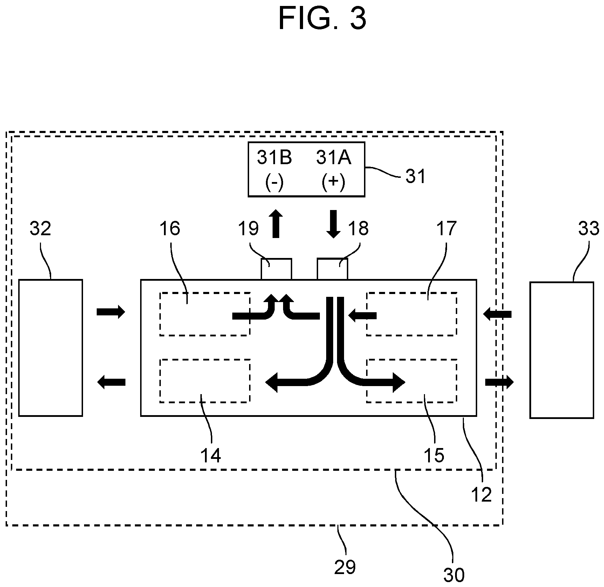

FIG. 3 is a function block diagram of a vehicle including relay module 12 according to the exemplary embodiment of the present disclosure. As illustrated in FIG. 3, for example, relay module 12 is mounted on vehicle body 30 of vehicle 29. Relay module 12 is connected to high-voltage battery 31 and vehicle load 32 mounted on vehicle body 30. Positive electrode 31A of high-voltage battery 31 is connected to first input terminal 18 of relay module 12, and negative electrode 31B of high-voltage battery 31 is connected to second input terminal 19 of relay module 12.

The positive potential side of vehicle load 32 is connected to positive electrode 31A of high-voltage battery 31 via first input terminal 18 and first load relay 14. Similarly, the negative potential side of vehicle load 32 is connected to negative electrode 31B of high-voltage battery 31 via second input terminal 19 and second load relay 16. In other words, first load relay 14 is disposed on a load electric current path on the plus polarity side, and second load relay 16 is disposed on a load electric current path on the minus polarity side.

Vehicle load 32 may, for example, be an electrical load such as a motor (not illustrated in the drawings) that is driven by vehicle 29 during travel or an electrical load encompassing a power conversion device (not illustrated in the drawings) that supplies electric power to an electrical load.

External power supply 33 is provided outside vehicle 29 and used to charge high-voltage battery 31 in a particularly short time. Therefore, external power supply 33 is not constantly connected to vehicle 29. When external power supply 33 is connected to charge high-voltage battery 31, the positive potential side of external power supply 33 is connected to positive electrode 31A of high-voltage battery 31 via first input terminal 18 and first charging relay 15. Similarly, the negative potential side of external power supply 33 is connected to negative electrode 31B of high-voltage battery 31 via second input terminal 19 and second charging relay 17. In other words, first charging relay 15 is disposed on a charging electric current path on the plus polarity side, and second charging relay 17 is disposed on a charging electric current path on the minus polarity side.

As described above, first load relay 14, second load relay 16, first charging relay 15, and second charging relay 17 are disposed on both the electric current paths on the plus and minus sides. Interruption particularly in the event of occurrence of an abnormal electric current is an important function for relay module 12 to ensure safety. Therefore, the relays are disposed at both the polarities in order to ensure function reliability, but the relay module is capable of fulfilling the function even when there is a relay in one of the electric current paths on the plus and minus sides.

Next, interruption conductor 20 and detection conductor 21 will be described.

### [Configuration of Interruption Conductor 20]

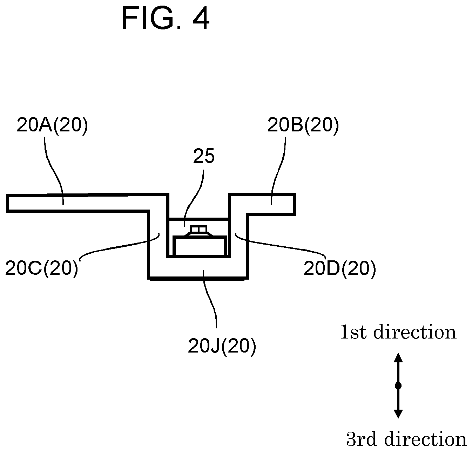

FIG. 4 is an external side view illustrating the configuration of interruption conductor 20 of the relay module according to the exemplary embodiment of the present disclosure. FIG. 5A is an external top view illustrating the configuration of interruption conductor 20 of the relay module according to the exemplary embodiment of the present disclosure. Fuse 25 is connected to interruption conductor 20.

As illustrated in FIG. 5A, fuse 25 is connected to first input terminal 18 via first conductor 27. One end of interruption conductor 20 is connected to first load relay 14, and the other end of interruption conductor 20 is connected to first charging relay 15 (refer to FIG. 2).

As illustrated in FIG. 5A, fuse 25 is connected to interruption conductor 20 and is connected to first input terminal 18 via first conductor 27. A portion of interruption conductor 20 to which fuse 25 is connected is denoted as connection point interruption conductor 20J (the third portion), a portion of interruption conductor 20 that is connected to first load relay 14 is denoted as load interruption conductor 20A (the first portion), a portion of interruption conductor 20 that is connected to first charging relay 15 is denoted as charging interruption conductor 20B (the second portion), a portion of interruption conductor 20 that connects load interruption conductor 20A and connection point interruption conductor 20J to each other is denoted as connection portion 20C, and a portion of interruption conductor 20 that connects charging interruption conductor 20B and connection point interruption conductor 20J to each other is denoted as connection portion 20D.

Each portion of interruption conductor 20 may be configured to have a difference in conductor cross-sectional area, conductor surface area, etc. For example, in order to improve the heat dissipation properties during constant energization, load interruption conductor 20A may be set larger in cross-sectional area, surface area, etc., than charging interruption conductor 20B. In order to secure electric current capacity for fast charging which is likely to be accompanied by high electric current density, charging interruption conductor 20B may be set larger in cross-sectional area, surface area, etc., than load interruption conductor 20A.

Note that as illustrated in FIG. 5A, first conductor 27 and first input terminal 18 may be formed as separate conductors and first conductor 27 and first input terminal 18 may be joined together. As illustrated in FIG. 5B, first conductor 27 is not necessarily required; first input terminal 18 may additionally include the function of first conductor 27, and first input terminal 18 may be directly connected to fuse 25.

In interruption conductor 20, load interruption conductor 20A, charging interruption conductor 20B, connection portion 20C, connection portion 20D, and connection point interruption conductor 20J may be formed as different or separate conductors and be joined together. Interruption conductor 20 may be formed from a single conductor.

As viewed from the side (as viewed in the second direction), first connection point interruption conductor 20J is located at a level different from the level at which each of load interruption conductor 20A and charging interruption conductor 20B is located. Interruption conductor 20 is bent, thereby including load interruption conductor 20A, connection portion 20C, connection point interruption conductor 20J, connection portion 20D, and charging interruption conductor 20B. In order to make the position of fuse 25 and the position of electric current detector 26 different in level as viewed from the side (as viewed in the second direction), as described above, interruption conductor 20 is bent. Furthermore, as a premise for the bent form of interruption conductor 20, first load relay 14 and first charging relay 15 are located at substantially the same level.

### [Configuration of Detection Conductor 21]

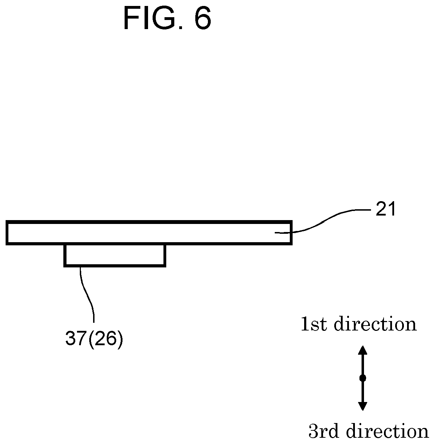

FIG. 6 is an external side view illustrating the configuration of detection conductor 21 of relay module 12 according to the exemplary embodiment of the present disclosure. FIG. 7A is an external top view illustrating the configuration of detection conductor 21 of relay module 12 according to the exemplary embodiment of the present disclosure. FIG. 7B is an external top view illustrating the configuration of another detection conductor 21 of relay module 12 according to the exemplary embodiment of the present disclosure. In the present exemplary embodiment, detection conductor 21 is formed from a single conductor extending horizontally. Electric current detector 26 includes shunt resistor 36 and detection circuit 37. Shunt resistor 36 is connected to detection conductor 21. Detection circuit 37 is provided below detection conductor 21 as illustrated in FIG. 6.

As illustrated in FIG. 7A, electric current detector 26 is connected to detection conductor 21 and is connected to second input terminal 19 via second conductor 34. The connection point is denoted as connection point detection conductor 21J, a portion that is connected to second load relay 16 is denoted as load detection conductor 21A, and a portion that is connected to second charging relay 17 is denoted as charging detection conductor 21B. Shunt resistor 36 is connected to second conductor 34 and detection conductor 21. Furthermore, detection circuit 37, which detects an electric current value on the basis of a potential difference generated in shunt resistor 36 when an electric current flows to shunt resistor 36, is positioned so as to come into close contact with second conductor 34 and detection conductor 21. Shunt resistor 36 is connected to connection point detection conductor 21J. Connection point detection conductor 21J is located between load detection conductor 21A and charging detection conductor 21B. The cross-sectional areas, the surface areas, etc., of these conductors may be different from each other. For example, in order to improve the constant heat dissipation properties for constant energization, load detection conductor 21A may be set larger in cross-sectional area or surface area than charging detection conductor 21B. In order to secure electric current capacity for fast charging which is likely to be accompanied by high electric current density, charging detection conductor 21B may be set larger in cross-sectional area or surface area than load detection conductor 21A.

Note that as illustrated in FIG. 7A, second conductor 34 and second input terminal 19 may be formed as separate conductors and second conductor 34 and second input terminal 19 may be joined together. As illustrated in FIG. 7B, second conductor 34 is not necessarily required; second input terminal 19 may additionally include the function of second conductor 34, and second input terminal 19 may be directly connected to electric current detector 26.

In detection conductor 21, load detection conductor 21A, charging detection conductor 21B, and connection point detection conductor 21J may be formed as different or separate conductors and be joined together. Detection conductor 21 may be formed from a single conductor.

Load detection conductor 21A, charging detection conductor 21B, and connection point detection conductor 21J are formed at the same position in the first direction as viewed from the side. In order to make the position of fuse 25 and the position of electric current detector 26 different in level as viewed from the side (as viewed in the second direction), as described above, detection conductor 21 is formed in the shape of a board.

In the present exemplary embodiment, shunt resistor 36 is formed from a conductor different from each of second conductor 34 and detection conductor 21. However, shunt resistor 36 may be provided as a single conductor shared with second conductor 34 and detection conductor 21. It is sufficient that shunt resistor 36 have a greater direct-current resistance value that those of second conductor 34 and detection conductor 21. Therefore, in the case where shunt resistor 36 is provided as a single conductor shared with second conductor 34 and detection conductor 21, a constricted portion may be formed between second conductor 34 and detection conductor 21 to serve as shunt resistor 36.

Detection circuit 37 which detects a potential difference generated in shunt resistor 36 is disposed on the lower surface of detection conductor 21. The upper surface of detection conductor 21 is in contact with insulating layer 22 as illustrated in FIG. 1. Detection conductor 21 is typically a conductor formed on a single surface, and thus when the upper surface of detection conductor 21, which has a large area, contacts insulating layer 22, the heat dissipation properties improve. Therefore, it is possible to maintain satisfactory heat dissipation properties of detection circuit 37 even when shunt resistor 36 is brought into contact with insulating layer 22 and detection circuit 37 is disposed on a surface of shunt resistor 36 opposite to insulating layer 22. Thus, electric current detector 26 has better heat dissipation properties than fuse 25. Furthermore, electric current detector 26 is positioned so as to minimize the strength of the thermal bond to fuse 25, interruption conductor 20, and the like.

As described above, detection conductor 21 and electric current detector 26 are disposed to be thermally strongly bonded to insulating layer 22 and heat dissipator 23, and electric current detector 26 is disposed to be thermally weakly bonded to fuse 25. Therefore, in particular, heat that is likely to be generated at the connection point between second load relay 16 and second charging relay 17, the connection point between second load relay 16 and detection conductor 21, and the connection point between second charging relay 17 and detection conductor 21 is actively discharged to heat dissipator 23 through detection conductor 21 and electric current detector 26. Furthermore, heat that is likely to be generated at the connection point between first load relay 14 and first charging relay 15 and the connection point between first charging relay 15 and interruption conductor 20 is not easily transferred to detection conductor 21 and electric current detector 26.

Therefore, even if a high electric current continuously flows to relay module 12, an increase in the temperature of detection conductor 21 due to factors other than heat generation caused by an electric current flowing to detection conductor 21 is suppressed. As a result, the operating temperature range of electric current detector 26 in detection conductor 21 is properly secured, enabling accurate electric current detection of detection conductor 21; thus, the operational reliability of relay module 12 can be improved.

In the above description, as one example, the vertical direction in FIG. 1 is used as a reference to define upward and downward directions for convenience of description. However, 90 or 180 degree rotated positioning of relay module 12 may be possible as long as the structural elements of relay module 12 are stacked in the same order.

Furthermore, in the above description, it is assumed that first input terminal 18 is on the positive electrode side and second input terminal 19 is on the negative electrode side, but this is one example; first input terminal 18 may be set on the negative electrode side and second input terminal 19 may be set on the positive electrode side.

### Outline

Relay module 12 according to one aspect of the present disclosure includes: base 13; first load relay 14 located in the first direction (the upward direction) from base 13 and fixed to base 13; first charging relay 15 located in the first direction (the upward direction) from base 13, spaced apart from first load relay 14, and fixed to base 13; second load relay 16 located in the first direction (the upward direction) from base 13 and fixed to base 13; second charging relay 17 located in the first direction (the upward direction) from base 13, spaced apart from second load relay 16, and fixed to base 13; interruption conductor 20 configured to connect first load relay 14 and first charging relay 15 to each other; fuse 25 connected to interruption conductor 20; first input terminal 18 connected to fuse 25; detection conductor 21 configured to connect second load relay 16 and second charging relay 17 to each other; electric current detector 26 connected to detection conductor 21; second input terminal 19 connected to electric current detector 26; insulating layer 22 disposed in the first direction (the upward direction) from first load relay 14, second load relay 16, first charging relay 15, and second charging relay 17; and heat dissipator 23 disposed in the first direction (the upward direction) from insulating layer 22. Fuse 25 is at least partially located between first load relay 14 and first charging relay 15. Electric current detector 26 is at least partially located between second load relay 16 and second charging relay 17. Electric current detector 26 is in contact with insulating layer 22. As viewed in the second direction perpendicular to the first direction (as viewed from the side), fuse 25 is located in the third direction (the downward direction), which is opposite to the first direction (the upward direction), from electric current detector 26. Fuse 25 is not in contact with electric current detector 26.

Furthermore, in relay module 12 according to another aspect, first conductor 27 and second conductor 34 are further included, first input terminal 18 is connected to fuse 25 via first conductor 27, and second input terminal 19 is connected to electric current detector 26 via second conductor 34.

Furthermore, in relay module 12 according to another aspect, electric current conductor 26 includes: shunt resistor 36; and detection circuit 37 configured to detect an electric current using shunt resistor 36, and detection conductor 21 is connected to second conductor 34 via shunt resistor 36.

Furthermore, in relay module 12 according to another aspect, shunt resistor 36 is in contact with insulating layer 22, and detection circuit 37 is located in the third direction (the downward direction) from shunt resistor 36.

Furthermore, in relay module 12 according to another aspect, interruption conductor 20 includes: a first portion (load interruption conductor 20A) connected to first load relay 14; a second portion (charging interruption conductor 20B) connected to first charging relay 15; a third portion (connection point interruption conductor 20J) located between the first portion and the second portion, and as viewed in the second direction (as viewed from the side), the third portion (connection point interruption conductor 20J) is located in the third direction (the downward direction) from the first portion (load interruption conductor 20A) and the second portion (charging interruption conductor 20B), and fuse 25 is connected to the third portion (connection point interruption conductor 20J).

Furthermore, in relay module 12 according to another aspect, first electrode 14C, which is provided on the upper surface of first load relay 14, and second electrode 15C, which is provided on the upper surface of first charging relay 15, are further included, the bottom of first load relay 14 is fixed to base 13, and the bottom of first charging relay 15 is fixed to base 13.

### INDUSTRIAL APPLICABILITY

The relay module according to the present disclosure produces the advantageous effect of enabling accurate electric current detection and improving the operational reliability, and thus is useful in various vehicles.

### REFERENCE MARKS IN THE DRAWINGS

1 relay module
2 main battery
3 vehicle load
4 plus-side main relay
5 minus-side main relay
6 external power supply
7 plus-side charging relay
8 minus-side charging relay
9 electric current sensor
10 fuse
12 relay module
13 base
14 first load relay
15 first charging relay
16 second load relay
17 second charging relay
14A, 15A, 16A, 17A bottom
14B, 15B, 16B, 17B upper surface
14C, 15C, 16C, 17C electrode
18 first input terminal
19 second input terminal
20 interruption conductor
20A load interruption conductor (first portion)
20B charging interruption conductor (second portion)
20C connection portion
20D connection portion
20J connection point interruption conductor (third portion)
21 detection conductor
21A load detection conductor
21B charging detection conductor
21J connection point detection conductor
22 insulating layer
23 heat dissipator
24 space
24A first space
24B second space
25 fuse
26 electric current detector
27 first conductor
29 vehicle
30 vehicle body
31 high-voltage battery
31A positive electrode
31B negative electrode
32 vehicle load
33 external power supply
34 second conductor
36 shunt resistor
37 detection circuit

## Claims

1. A relay module, comprising:
a base;
a first load relay located in a first direction from the base and fixed to the base;
a first charging relay located in the first direction from the base, spaced apart from the first load relay, and fixed to the base;
a second load relay located in the first direction from the base and fixed to the base;
a second charging relay located in the first direction from the base, spaced apart from the second load relay, and fixed to the base;
an interruption conductor configured to connect the first load relay and the first charging relay to each other;
a fuse connected to the interruption conductor;
a first input terminal connected to the fuse;
a detection conductor configured to connect the second load relay and the second charging relay to each other;
an electric current detector connected to the detection conductor;
a second input terminal connected to the electric current detector;
an insulating layer disposed in the first direction from the first load relay, the second load relay, the first charging relay, and the second charging relay; and
a heat dissipator disposed in the first direction from the insulating layer, wherein
the fuse is at least partially located between the first load relay and the first charging relay,
the electric current detector is at least partially located between the second load relay and the second charging relay,
the electric current detector is in contact with the insulating layer,
as viewed in a second direction perpendicular to the first direction, the fuse is located in a third direction from the electric current detector, the third direction being opposite to the first direction, and
the fuse is not in contact with the electric current detector.

2. The relay module according to claim 1, further comprising:
a first conductor; and
a second conductor, wherein
the first input terminal is connected to the fuse via the first conductor, and
the second input terminal is connected to the electric current detector via the second conductor.

3. The relay module according to claim 2, wherein
the electric current conductor includes:
a shunt resistor; and
a detection circuit configured to detect an electric current using the shunt resistor, and
the detection conductor is connected to the second conductor via the shunt resistor.

4. The relay module according to claim 3, wherein
the shunt resistor is in contact with the insulating layer, and
the detection circuit is located in the third direction from the shunt resistor.

5. The relay module according to any one of claims 1 to 4, wherein
the interruption conductor includes: a first portion connected to the first load relay; a second portion connected to the first charging relay; and a third portion located between the first portion and the second portion,
as viewed in the second direction, the third portion is located in the third direction from the first portion and the second portion, and
the fuse is connected to the third portion.

6. The relay module according to any one of claims 1 to 5, further comprising:
a first electrode on an upper surface of the first load relay; and
a second electrode on an upper surface of the first charging relay, wherein
a bottom of the first load relay is fixed to the base, and
a bottom of the first charging relay is fixed to the base.
